# EUROPEAN PATENT APPLICATION

(11) **EP 1 364 895 A1**
(43) Date of publication of application: **26.11.2003**
(21) Application number: 03396046.9
(22) Date of filing: 21.05.2003
(51) Int. Cl.: B65G 1/137, B65G 1/04

(54) **Method and system for storing carpets**

(30) Priority: 23.05.2002 FI 20020971
(71) Applicant: Lindström OY, 00581 Helsinki (FI)
(72) Inventor: Niemi, Pekka, 01710 Vantaa (FI)
(74) Representative: Risku, Ira Marjatta

(57) **Abstract**

The invention relates to a method and a storage system for storing products such as carpets and picking them in determined delivery lots as a continuous flow of products, in which carpets are suspended as carpet units from hanger means running on a rail (4, 6, 11), the carpet units being guided to a storage space (5). The system comprises control logic software, by means of which a robot (8) retrieving carpet units is controlled in the storage space, the robot comprising an identifying device for identifying carpet units by means of an identification system, the robot (8) picking the desired carpet unit from the storage rail (6) and conveying it to a transfer station (10).

## Description

The invention relates to an automatic and dynamic system for intermediate storage and sorting of carpets.

Replaceable carpets have been increasingly used on public premises over the last years. Companies may pick a suitable carpet for different objects and purposes of use from the carpet supplier's range. Usually the carpets are the property of the carpet supplier, who rents them to customers. The carpet supplier takes care of replacing, repairing, cleaning, storing and transporting the carpets.

The operation of current systems is the following: when a carpet on the customer's premises is replaced with a clean one, the fouled carpet is transported to the carpet supplier's premises for cleaning and storage until used the next time. The carpet is washed in a washing unit, dried in a drier and transported from there to the reception station of the storage space. At the reception station, the carpets are wound manually and taken to the storage. The carpets are stored and sorted by hand into racks in their order of arrival at the storage. When a carpet is needed again, it is sought out from the storage and retrieved manually from its storage location. Since there are carpets of many kinds and colours, it is difficult to keep them in order, and finding and fetching the correct carpet is a laborious, time-consuming and awkward operation.

The purpose of the present invention is to provide a storing and sorting system comprising automatic intermediate storage, identification and retrieval of carpets. Another objective of the invention is to provide a method for implementing the storing and sorting system. This has been achieved in accordance with the invention in the way described in the accompanying drawings.

The system of the invention allows carpets to be fed into and picked from intermediate storage in specific delivery lots as a continuous product flow. The storage space thus acts as a dynamic buffer, from where carpets can be picked at the same time as they are brought there. The automated storing and retrieval system of the invention allows for a random number of different carpets to be stored in undefined order, while still being rapidly and efficiently fetched by automatic means for packaging, once all the carpets in a lot have been included in the system.

Owing to the system of the invention, manual work is substantially reduced and service ability and reliability of operation are improved when the carpets are consistently put into transport units in the correct order at the right moment.

In the system of the invention, a carpet that has arrived from the washing unit and the drier is conveyed to the storage input station and is manually suspended by its edge on a hanger means running on a rail. The carpet and the hanger means together form a carpet unit to be stored. An identifying means, such as a bar code, a microchip, a magnetic tape or similar, has been attached to the carpet hanger means and also to the carpet if desired. The carpet data are manually entered (unless the carpet comprises a microchip) or using an automatic reader (provided that the carpet comprises a microchip) in a computer, which contains logic software for control of the system. In the computer memory, the carpet data are combined with the identifying data of the hanger means. Then the carpet unit is transferred to a storage space comprising a plurality of aligned storage rails by reading the identifying data on the hanger means. In the system of the invention, the carpet units are transferred to the storage rails using screw conveyors, for instance. The carpets are stored on these storage rails in their order of arrival at the storage. There is no need for sorting the carpets on the storage rails, however, if desired, sorting to a certain extent can be automatically performed using suitable logic software. The data of each carpet unit and its serial number on the storage rail are recorded in the logic program by means of a sensor provided on each storage rail.

A rail on which a pick-up robot has been mounted to run separates the storage rails. When all the products of a suitable delivery lot can be found on the storage rails, the robot is given the identification data of the carpets units included in the delivery lot by the folding station of the dispatch unit, using logic software. The robot has an identifying apparatus, e.g. a bar code reader, by means of which the robot identifies the data contained in the hanger means of the carpet unit, and the robot retrieves the carpet unit from the storage rail and conveys it to a transfer station located at the end of the rails, from where the carpet units are automatically transferred using a screw conveyor, for instance, to the folding/packaging station in the order of packaging. After this, the identification data of the carpet relating to each storage rail is set at zero in the memory of the logic software.

The invention is applicable also to other products to be stored that can be handled as described above.

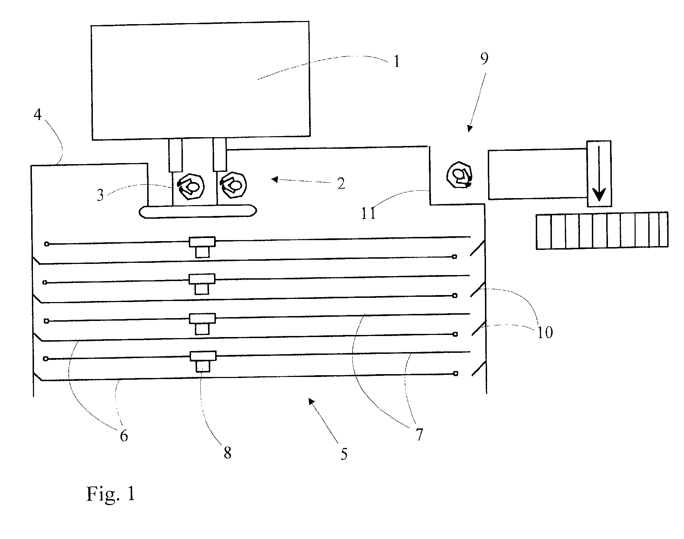

The invention is described below with reference to the drawing. Figure 1 is a schematic view of the storage system of the invention.

Figure 1 shows the washing unit and the drier 1, where a carpet arriving at the storage is washed and dried, respectively. From the washing unit and the drier 1, the carpet is conveyed to the storage input station 2, where it is manually suspended by its edge from the rail 3 using a hanger means running on the rail. The carpet and the hanger means together form a carpet unit (not shown in the figure). The carpet data are manually entered at the input station 2 (unless the carpet comprises a microchip) or by an automatic reader (provided that the carpet comprises a microchip) in a computer, which contains logic software for control of the system. In the computer memory, the carpet data are combined with the identification data of the hanger means. After this, the carpet unit is taken on the rail 4 by means of an automated screw conveyor to the storage space 5. The storage space 5 comprises a plurality of aligned storage rails 6 separated by rails 7 for a robot. A screw conveyor takes the carpet to its position on the storage rail 6. Each rail 6 has a sensor (not illustrated in the figure), by means of which the arrival of each carpet unit and its serial number on the storage rail are recorded in the logic program.

A robot 8 has been mounted to run on each rail 7. When all the products of a suitable lot can be found on the storage rails, the robot 8 is given the identification data of the carpet units included in the lot from the folding station 9 of the dispatch unit using the logic program. The robot 8 identifies the identifier means data of a carpet unit and retrieves the related carpet unit from the storage rail 6, taking it to the transfer station 10 located at the end of the rails, from where the carpet unit is conveyed on the rail 11 to the folding station. After this, the carpet identification data relating to each storage rail is set at zero in the memory of the logic system and the hanger means is returned on rail 11 to the input station 2.

A number of embodiments of the invention have been described above. The invention is naturally not restricted to the examples above, the principle of the invention being variable within the scope of protection of the claims.

## Claims

1. A method for storing and sorting products such as carpets **characterised in** guiding carpets to a storage space and in picking out the carpets to form determined delivery lots as a continuous flow of products.

2. A method as defined in claim 1, **characterised in that** the carpets are suspended as carpet units from hanger means moving on a rail (4, 6, 11), the carpet units being guided by means of logic software to a storage rail (6) in a storage space (5), from where the desired carpet unit is picked by a robot (8) retrieving carpet units, the robot comprising an identifying device for identifying carpet units by means of an identification means provided in the carpet unit, and is conveyed to a transfer station (10) for further delivery.

3. A storage system for storing products such as carpets, **characterised in that** the carpets are suspended as carpet units on hanger means moving on a rail (4, 6, 11), the carpet units being guided to a storage space (5), from where the desired carpet unit is retrieved for further delivery to the transfer station (10), and that the system includes logic software for control of the system, by means of which the robot (8) retrieving carpet units is controlled in the storage space, the robot comprising an identifying device for identifying carpet units by means of an identifying means included in the carpet unit, the robot (8) picking the desired carpet unit from the storage rail (6) and conveying it to the transfer station (10).

4. A storage system as defined in claim 3, **characterised in that** the system comprises a input station (2), where the carpet is suspended on a rail (3) by means of a hanger means running on this.

5. A storage system as defined in claim 3, **characterised in that** the identifying means is attached to the carpet hanger means and to the carpet, if desired.

6. A storage system as defined in claim 5, **characterised in that** the identifying means is a bar code, a microchip, a magnetic tape or similar.

7. A storage system as defined in claim 3, **characterised in that** the carpet data are entered in the logic software at the input station (2) manually or by an automatic reader.

8. A storage system as defined in claim 3, **characterised in that** the robot (8) runs on rails (7) passing between the storage rails (6) of the storage space (5).

9. A storage system as defined in claim 8, **characterised in that** the storage rail (6) comprises a sensor, by means of which the arrival of each carpet unit and its serial number on the storage rail are recorded in the logic software.
